(19) Europäisches Patentamt
European Patent Office
Office européen des brevets

(11) Numéro de publication : **0 123 752**
**B1**

(12) # FASCICULE DE BREVET EUROPÉEN

(45) Date de publication du fascicule du brevet : **01.10.86**

(51) Int. Cl.⁴ : **C 01 B 33/28**

(21) Numéro de dépôt : **83400849.2**

(22) Date de dépôt : **28.04.83**

(54) **Procédé économique de fabrication de zéolites Y.**

(43) Date de publication de la demande :
**07.11.84 Bulletin 84/45**

(45) Mention de la délivrance du brevet :
**01.10.86 Bulletin 86/40**

(84) Etats contractants désignés :
**BE DE GB IT NL SE**

(56) Documents cités :
**FR-A- 1 440 937**
**FR-A- 1 475 167**
**FR-A- 2 411 803**
**US-A- 3 459 501**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Latourrette, Bertrand**
**21, Allée Clémencet**
**F-93340 - Le Raincy (FR)**
Inventeur : **Poisson, Régis**
**17, avenue de la Cigale**
**F-92600 Asnières (FR)**

(74) Mandataire : **Dubruc, Philippe et al**
**RHONE-POULENC INTERSERVICES Service Brevets Chimie 25, quai Paul-Doumer**
**F-92408 Courbevoie Cédex (FR)**

**EP 0 123 752 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un procédé économique de fabrication de zéolites de type Y.

Les zéolites de type Y sont préparées en faisant réagir une source de silice et d'alumine, de la soude et de l'eau à environ 100 °C. Généralement la réaction de formation de la zéolite nécessite un excès important de silice et de soude qui restent dans la liqueur mère de cristallisation et que l'on doit finalement utiliser ou rejeter. Pour éviter les problèmes de pollution et de gaspillage économique que constitue un tel rejet, il a été proposé diverses solutions.

Ainsi, le brevet américain n° 2 882 244 décrit la préparation de zéolite du type Y par un procédé qui propose de pouvoir réutiliser la liqueur mère après enrichissement avec des quantités appropriées de réactifs pour obtenir un mélange réactionnel convenablement dosé.

Par ailleurs, le brevet américain n° 4 164 551 décrit un procédé de synthèse de zéolite Y utilisant la liqueur mère après enrichissement avec des quantités appropriées de sel d'aluminium pour obtenir un hydrogel lavé réutilisable comme matière première. Ce procédé nécessite la mise en œuvre de centres de nucléation de composition donnée et la mise en œuvre d'un mélange réactif de composition suivante :

$$3\text{-}6\ Na_2O\ ;\ 8\text{-}12\ SiO_2/Al_2O_3\ ;\ 120\text{-}200\ H_2O.$$

La demanderesse a mis au point un procédé de fabrication de zéolite de type Y qui ne nécessite pas la mise en œuvre de centres de nucléation et qui permet l'utilisation de mélanges réactifs de compositions très variées. Le procédé de la présente invention permet ainsi une simplification et une économie considérable par rapport au procédé décrit. En effet, la préparation des centres de nucléation dans le procédé du brevet américain n° 4 164 551 s'avère longue et délicate à mettre en œuvre et la composition très étroite du mélange réactionnel ne permet pas d'utiliser une large gamme de compositions par les réactifs.

La présente invention concerne en effet un procédé de fabrication de zéolite Y du genre qui comprend le chauffage d'un mélange réactionnel contenant de la silice, de l'alumine, de la soude et de l'eau pour produire la zéolite et une liqueur mère contenant de la soude et de la silice en excès qui est combinée avec un sel d'aluminium acide acide pour obtenir un hydrogel précipité de silice et d'alumine, ledit hydrogel étant utilisé comme partie d'un mélange réactionnel ultérieur caractérisé en ce que le mélange réactionnel contient en outre un métasilicate de sodium hydraté, le mélange réactionnel contient les rapports molaires suivants de réactifs : $SiO_2/Al_2O_3$ : 5 à 15 ; $Na_2O/SiO_2$ : 0,2 à 2 $H_2O/Na_2O$ : 12 à 200.

Le métasilicate de sodium hydraté mis en œuvre dans le procédé de l'invention est un métasilicate de sodium penta ou nona-hydraté dont la formule est $Na_2SiO_3$, $5H_2O$ ou $Na_2SiO_3$, $9H_2O$.

Dans le mélange réactionnel, la proportion en poids de silice provenant du métasilicate de sodium hydraté est comprise entre 1 et 100 % et de préférence entre 2 et 60 % et plus particulièrement entre 5 et 15 %.

Le mélange réactionnel contient les rapports molaires suivants de réactifs :

$SiO_2/Al_2O_3$ : 5 à 15,
$Na_2O/SiO_2$ : 0,2 à 2,
$H_2O/Na_2O$ : 12 à 200.

On obtient ce mélange en mélangeant des solutions de silicate de sodium, d'aluminate de sodium, du métasilicate de sodium hydraté et l'hydrogel de silice et d'alumine que l'on obtient en mélangeant un sel acide d'aluminium avec des constituants de silicate de sodium présents dans la liqueur mère de cristallisation.

La présente invention est maintenant décrite dans un mode de mise en œuvre préféré.

Le mélange réactionnel est chauffé aux environs de 100°, ce qui conduit à la cristallisation de zéolite Y finement divisée en suspension dans la liqueur mère. On soumet celle-ci à une étape de filtration, on récupère ainsi la zéolite Y que l'on lave à l'eau et qui peut ensuite être stockée, séchée, échangée, etc... Le filtrat et les eaux de lavage provenant de l'étape de filtration de la zéolite sont envoyés dans le réservoir de stockage de la liqueur mère. La liqueur mère est alors constituée principalement d'une solution relativement diluée de silicate de sodium dans l'eau, ainsi que de petites quantités d'alumine et de zéolite. La liqueur mère de stockage est ensuite envoyée dans un réservoir dans lequel on ajoute une quantité appropriée de solution de sel d'aluminium acide qui est de préférence du sulfate d'aluminium. Cette addition de sel d'aluminium conduit avec le silicate présent à former un hydrogel finement divisé de silice et d'alumine. L'hydrogel de silice et d'alumine qui précipite de la solution est récupéré par filtration, on le lave avec de l'eau pour éliminer l'excès de solution de sulfate de sodium qui peut être éliminée ou réutilisée. L'hydrogel de silice et d'alumine obtenu qui est stocké dans un réservoir présente un rapport pondéral $SiO_2/Al_2O_3$ compris entre 2 et 8, il contient entre environ 70 à environ 90 % en poids en poids d'eau, le reste étant constitué de $Na_2O$ et de $Na_2SO_4$, est utilisé dans la réaction de synthèse de la zéolite. L'hydrogel est pompé du réservoir de stockage dans le réacteur de cristallisation de la zéolite dans lequel

on ajoute la solution de silicate de sodium et de métasilicate de sodium hydraté puis la solution d'aluminate de sodium.

La zéolite de type Y obtenue par le procédé de l'invention peut notamment être utilisée dans les domaines de l'adsorption et de la catalyse.

Les exemples ci-après illustrent l'invention sans en limiter la portée.

Exemple 1

On prépare une silice alumine par neutralisation d'une solution de silicate de sodium qui comporte $3Na_2O \cdot 5,2SiO_2$ par une solution de sulfate d'aluminium dans des proportions telles que l'on obtient une silice alumine de rapport molaire $SiO_2/Al_2O_3 = 5,2$. Cette silice alumine récupérée par filtration puis lavée pour éliminer le sulfate de sodium soluble a un extrait sec de 22 %.

On prépare une solution de silicate de composition chimique $4Na_2O \cdot 4,8SiO_2$ $118H_2O$ qui comporte 20,8 % de la silice totale sous forme de métasilicate pentahydratés.

Pour préparer la zéolithe Y on ajoute à la solution de silicate sous agitation, la silice alumine dans des proportions telles que l'on obtienne la composition chimique molaire :

$$1Al_2O_3\ 10SiO_2\ 4Na_2O\ 200H_2O$$

Le mélange effectué à température ambiante est porté à 100 °C. Après 12 heures de cristallisation à 100 °C on recueille après filtration et lavage, une zéolithe Y bien cristallisée de rapport molaire :

$$SiO_2/Al_2O_3 = 4,8$$

et un filtrat constitué par les eaux-mères et les eaux de lavage.

Ce filtrat est une solution diluée de silicate de sodium qui comporte en mole $3Na_2O$ pour 5,2 $SiO_2$.

La silice contenue dans ce filtrat est récupérée en totalité par neutralisation par une solution de sulfate d'aluminium de manière à obtenir un hydrogel de silice alumine. Cette silice alumine, après filtration et lavage est utilisée comme matière première en association avec une solution de silicate de sodium comportant une partie de la silice sous forme de $Na_2SiO_3$ $5H_2O$ dans des proportions telles que l'on obtienne un mélange de composition molaire :

$$1Al_2O_3\ 10SiO_2\ 4Na_2O\ 200H_2O$$

Le mélange après cristallisation de 12 heures à 100 °C donne une zéolithe Y de rapport molaire $SiO_1/Al_2O_3 = 4,8$ et un filtrat que l'on peut recycler à une nouvelle synthèse de zéolithe Y.

Exemple 2

Cet exemple est identique à celui de l'exemple 1 sauf que la composition chimique molaire du mélange est :

$$1Al_2O_3\ 9SiO_2\ 3,3Na_2O\ 180H_2O$$

qui donne après cristallisation de 10 heures à 100 °C une zéolithe Y de rapport molaire $SiO_2/Al_2O_3 = 4,9$ et des eaux-mères diluées par les eaux de lavage de composition $4,1SiO_2$ $2,3Na_2O$.

Le filtrat (eaux-mères et eaux de lavage) est neutralisé par une solution de sulfate d'aluminium dans des proportions telles que l'on obtienne après filtration et lavage une silice alumine de composition molaire 0,77 $Al_2O_3$ $4,1SiO_2$ d'extrait sec 20 %.

Pour préparer une nouvelle zéolithe Y, cette silice alumine est ajoutée à une solution de silicate de sodium de composition molaire $4,9SiO_2$, $2,9Na_2O$ qui comporte 20 % de la silice totale sous forme de métasilicate hydraté.

A ce mélange, on ajoute une solution d'aluminate de sodium de composition molaire $0,23Al_2O_3$ $0,44Na_2O$.

Les proportions des réactifs sont telles que la composition chimique molaire du mélange soit :

$$1Al_2O_3\ 9SiO_2\ 3,3Na_2O\ 180H_2O$$

Le mélange réactionnel effectué au voisinage de 20 °C est porté à 100 °C. Après 12 heures de cristallisation on obtient une zéolithe Y qui, après lavage, est caractérisée par un rapport $SiO_2/Al_2O_3 = 4,9$.

Les eaux-mères et les eaux de lavage après mélange sont réutilisées pour une nouvelle synthèse.

Exemple 3

Cet exemple est identique à l'exemple 2, sauf que la composition chimique molaire du mélange est :

$$1Al_2O_3\ 6SiO_2\ 1{,}85Na_2O\ 180H_2O$$

Le filtrat constitué par les eaux-mères et les eaux de lavage a une composition molaire de $1{,}2SiO_2$ pour $0{,}85Na_2O$.

Ce filtrat neutralisé par une solution d'un sulfate d'aluminium donne un hydrogel de silice alumine qui, après filtration et lavage, a une composition molaire de $0{,}28Al_2O_3$ pour $1{,}2SiO_2$ et un extrait sec de 22,5 %.

Pour préparer une zéolithe Y, on ajoute cette silice alumine à une solution de silicate de sodium de composition $4{,}8SiO_2\ 2{,}09Na_2O$ qui comporte 10,4 % de la silice sous forme de métasilicate hydraté. On ajoute à ce mélange une solution de sulfate d'aluminium correspondant à l'apport de $0{,}72\ Al_2O_3$.

Les quantités mises en œuvre permettent d'obtenir un mélange de composition chimique molaire :

$$1Al_2O_3\ 6SiO_2\ 1{,}85Na_2O\ 180H_2O$$

Le mélange au voisinage de 20 % est porté à 100 °C et cristallisé à cette température pendant 12 heures.

Le produit obtenu après filtration et lavage est identique à celui de l'exemple 1.

## Revendications

1. Procédé de fabrication de zéolite du type Y du genre qui comprend le chauffage d'un mélange réactionnel contenant de la silice, de l'alumine, de la soude et de l'eau pour produire la zéolite et une liqueur mère contenant de la soude et de la silice en excès qui est combinée avec un sel d'aluminium acide pour obtenir un hydrogel précipité de silice et d'alumine, ledit hydrogel étant utilisé comme partie d'un mélange réactionnel ultérieur, caractérisé en ce que le mélange réactionnel contient en outre un métasilicate de sodium hydraté, et correspond aux rapports molaires suivants de réactifs : $SiO_2/Al_2O_3$ : 5 à 15 ; $Na_2O/SiO_2$ : 0,2 à 2 ; $H_2O/Na_2O$ : 12 à 200 ;

2. Procédé selon la revendication 1 caractérisé en ce que le métasilicate de sodium hydraté est un métasilicate de sodium penta ou nona-hydraté dont la formule est $Na_2SiO_3$, $5H_2O$ ou $Na_2SiO_3$, $9H_2O$.

3. Procédé selon la revendication 1 caractérisé en ce que dans le mélange réactionnel, la proportion en poids de silice provenant du métasilicate de sodium hydraté est comprise entre 1 et 100 %.

4. Procédé selon la revendication 3 caractérisé en ce que cette proportion est comprise entre 2 et 60 % et de préférence entre 5 et 15 %.

## Claims

1. A process for the production of zeolite of type Y, of the kind which comprises heating a reaction mixture containing silica, alumina, soda and water to produce zeolite and a mother liquor containing soda and silica in excess, which is combined with an acid aluminium salt to produce a precipitated hydrogel of silica and alumina, said hydrogel being used as part of a subsequent reaction mixture, characterised in that the reaction mixture further contains a hydrated sodium metasilicate and corresponds to the following molar ratios of reactants : $SiO_2/Al_2O_3$ : 5 to 15 ; $Na_2O/SiO_2$ : 0.2 to 2 ; $H_2O/Na_2O$ : 12 to 200.

2. A process according to claim 1 characterised in that the hydrated sodium metasilicate is a penta or nona-hydrated sodium metasilicate whose formula is $Na_2SiO_3$, $5H_2O$ or $Na_2SiO_3$, $9H_2O$.

3. A process according to claim 1 characterised in that, in the reaction mixture, the proportion by weight of silica from the hydrated sodium metasilicate is between 1 and 100 %.

4. A process according to claim 3 characterised in that said proportion is between 2 and 60 % and preferably between 5 and 15 %.

## Patentansprüche

1. Verfahren zur Herstellung von Zeolith des Typs Y, das das Erhitzen eines Reaktionsgemischs umfaßt, das Kieselsäure, Aluminiumoxid, Soda und Wasser zur Herstellung des Zeoliths und eine Mutterlauge, die Soda und Kieselsäure im Überschuß enthält, und die mit einem sauren Aluminiumsalz umgesetzt wird, um ein gefälltes Kieselsäure/Aluminium-oxid-Hydrogel zu erhalten, wobei das Hydrogel als Teil des endgültigen Reaktionsgemischs verwendet wird, dadurch gekennzeichnet, daß das Reaktionsgemisch außerdem ein hydratisiertes Natriummetasilikat enthält und die folgenden molaren Verhältnisse der Reaktionsteilnehmer aufweist : $SiO_2/Al_2O_3$ : 5 bis 15 ; $Na_2O/SiO_2$ : 0,2 bis 2 ; $H_2O/Na_2O$ : 12 bis 200.

2. Verfahren nach Anspruch 1, dadurch gekennzeichnet, daß das hydratisierte Natriummetasilikat der Formel $Na_2SiO_3 \cdot 5H_2O$ oder $Na_2SiO_3 \cdot 9H_2O$ entspricht.

3. Verfahren nach Anspruch 1, dadurch gekennzeichnet, daß in dem Reaktionsgemisch der Gewichtsanteil der Kieselsäure aus dem hydratisierten Natriummetasilikat zwischen 1 und 100 % liegt.

4. Verfahren nach Anspruch 3, dadurch gekennzeichnet, daß dieser Anteil zwischen 2 und 60 % und vorzugsweise zwischen 5 und 15 % liegt.